# EUROPEAN PATENT SPECIFICATION

(11) **EP 3 363 862 B1**
(45) Date of publication and mention of the grant of the patent: **11.11.2020**
(21) Application number: 16855600.9
(22) Date of filing: 23.06.2016
(51) Int. Cl.: G02B 1/04, C08L 33/16, C08L 71/02, C08F 2/44, C08K 5/00, G02C 7/04, C08F 220/20, C08F 265/06, C08L 51/00

(54) **PHOTOCHROMIC SOFT CONTACT LENS COMPOSITION AND METHOD FOR PREPARING SAME**
PHOTOCHROME WEICHE KONTAKTLINSENZUSAMMENSETZUNG UND VERFAHREN ZUR HERSTELLUNG DAVON
COMPOSITION POUR LENTILLE DE CONTACT SOUPLE PHOTOCHROMIQUE ET SON PROCÉDÉ DE PRÉPARATION

(30) Priority: 12.10.2015 KR 20150142047
(43) Date of publication of application: 22.08.2018
(73) Proprietor: Medios Co Ltd, Daejeon 34324 (KR)
(72) Inventor: PARK, Jae-yeun, Daejeon 34076 (KR); PARK, Young-Ju, Changwon-city Gyeongsangnam-do 51202 (KR)
(74) Representative: Ter Meer Steinmeister & Partner
(86) International application number: PCT/KR2016/006716
(87) International publication number: WO 2017/065382

(56) References cited:
- WO-A1-2004/068215
- WO-A1-2011/053633
- JP-A- 2003 534 562
- JP-A- 2011 008 279
- JP-B2- 5 589 202
- KR-A- 920 012 133
- US-A- 5 302 678

## Description

### [Technical Field]

The present invention relates to a composition of a photochromic soft contact lens and a method for preparing the same, and more particularly, to a composition of a photochromic soft contact lens and a contact lens prepared using the same that can be worn safely and comfortably by lowering light transmittance while being colorless and transparent at night and indoors and colored under the sunlight to block ultraviolet rays and the sunlight.

### [Background Art]

A photochromic dye may include a spiropyrene compound, a spirooxazine compound, a thioindigo compound, a triarylmethane compound, and the like. These compounds are materials in which molecular structures are changed when being exposed to the ultraviolet rays to be colored and have been variously used in design and optical parts in recent years. Among them, an example applied to the optical part may be found in architectural glass or automotive glass, and in general, when transparent glass or sunlight is applied, the compound has a gray or brown-based dark color to be used for blocking the field of view and blocking ultraviolet rays or sunlight, and application examples have been gradually increased even in an eyeglass lens field. However, in a soft contact lens field, it is difficult to acquire the effects. For the reason, the materials configuring the soft contact lens, for example, 2-hydroxyethylmethacrylate, N-vinylpyrrolidone, N,N-dimethyl acrylamide, methacrylic acid, and the like are strong hydrophilic materials. In order to wear the lens formed using the material in an eyeball, necessarily, the lens is immersed in water through a wet process, and when a polymer containing the photochromic dye is in contact with a hydrophilic material or water, it is difficult to apply the polymer because of the problem of cloudy whitening. Further, for commercial and practical application, when the lens colored by the sunlight is placed indoors and in the shade, the color quickly disappears and thus the lens needs to be transparent state, and when the color disappearing time is not short, the effectiveness is much deteriorated. Due to these problems, there are many difficulties in being used as a photochromic soft contact lens by adding the photochromic dye to a general soft contact lens composition.

In general, in order to exhibit the photochromic effect, a specific dye referring to as the photochromic dye is mixed and the cured in a binder resin such as acrylic, epoxy, urethane or silicon. In WO 2011/053633 a photochromic dye was added to a microemulsion precursors comprising water, 2-hydroxyethyl methacrylate and a poly(ethylene oxide)-macromonomer in order to obtain a contact lens. US 5,302,678 suggested preparing a contact lens by copolymerizing a monomer mixture including a fluorine-containing monomer with the general formula (I) 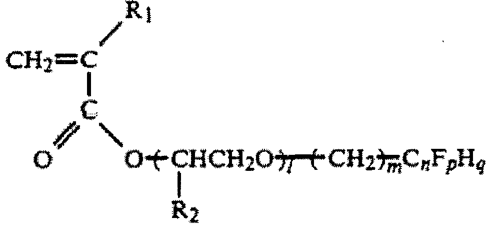 wherein the indices *l* and *m* are both at least 1.

In Korean Patent Publication No. 10-2008-0113467 in the related art related with this, disclosed are a silicone hydrogel composition for a soft contact lens and a soft contact lens prepared by the composition.

Therefore, the present inventors continuously conducted researches to develop a soft contact lens having a smoother photochromic effect in which the color produced in the sunlight can more rapidly disappear in the shade. In the known soft contact lens composition and found that the lens colored by the sunlight may be restored to a colorless and transparent initial state in the absence of sunlight by adding both a fluoroester compound and a polyethylene(propylene)oxide-containing (meth)acrylate compound to a soft lens composition which is commonly known. As a result, the present inventors completed the present invention.

### [Disclosure]

### [Technical Problem]

Therefore, a technical object to be solved in the present invention is to prepare a composition for a photochromic soft contact lens that can exhibit a smooth photochromic effect while a whitening problem does not occur in a wetted soft contact lens which is wearable in the eye and quickly restore the lens colored by the sunlight to be in a colorless and transparent initial state in a situation without the sunlight.

Further, another technical object to be solved in the present invention is to provide a method for preparing a photochromic soft contact lens.

### [Technical Solution]

In order to achieve the technical objects, the present invention provides a composition according to claim 1.

The composition of a photochromic soft contact lens includes a photochromic dye, a copolymer synthesized of a fluoroester compound represented by the following Chemical Formula 1 and 2-hydroxyethyl methacrylate and a polyethylene(propylene)oxide-containing (meth)acrylate compound represented by the following Chemical Formula 2.

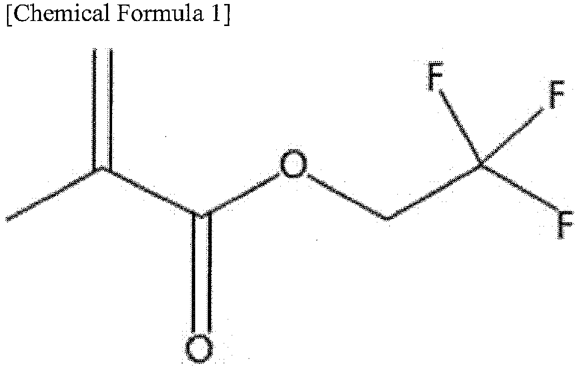

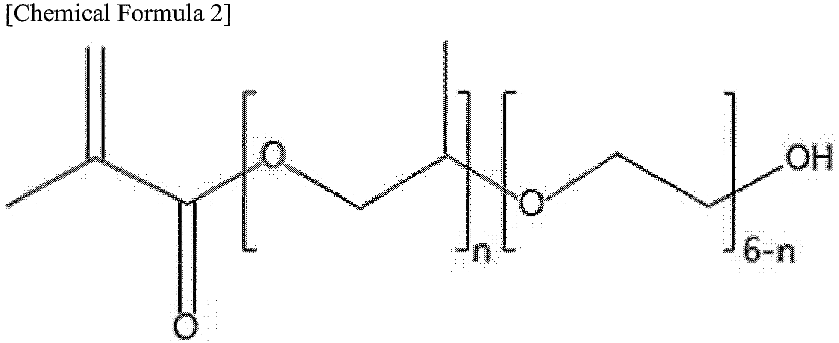

The index n is 0, 3 or 6. Further components are comprised by the composition as outlined in claim 1.

Further, in order to achieve another technical object, the present invention provides a method according to claim 2.

The method for preparing a photochromic soft contact lens includes the following steps:
(S1) synthesizing a copolymer of a fluoroester compound and 2-hydroxyethyl methacrylate;
(S2) mixing a composition for a contact lens including a polyethylene(propylene)oxide-containing (meth)acrylate compound, a hydrophilic acrylate monomer, a crosslinking agent, and an initiator with the copolymer prepared in step (S1);
(S3) dissolving a photochromic dye mixed in step (S2);
(S4) injecting the composition dissolved in step (S3) to a mold for forming the contact lens;
(S5) heat-treating the mold for forming the contact lens to which the composition in step (S4) is injected;
(S6) separating the formed contact lens from the mold;
(S7) wetting and disinfecting the contact lens; and
(S8) packaging and sterilizing the contact lens.

### [Advantageous Effects]

According to the present invention, it is possible to prepare a photochromic soft contact lens, which is optically transparent and has no whitening, rapidly discolored to have a color by the sunlight, and quickly restored to be colorless and transparent when the sunlight is removed.

### [Modes of the Invention]

A composition of a photochromic soft contact lens of the present invention includes a fluoroester compound and a polyethylene(propylene)oxide-containing (meth)acrylate compound in a general soft contact lens composition.

In general, when the fluoroester compound of Chemical Formula 1 above is used together in a composition composed of hydrophilic monomers such as 2-hydroxyethyl methacrylate, N-vinyl pyrrolidone, N,N-dimethylacrylamide, methacrylic acid and the like, which are generally used in soft contact lenses, even after the contact lens is wetted, a whitening phenomenon may be prevented. When the polyethylene(propylene)oxide-containing (meth)acrylate compound of Chemical Formula 2 above is used together in the contact lens composition, the compound acts as a spacer in the contact lens, and as a result, the discoloration speed to have the color by the sunlight is fast, and the contact lens which is discolored to have a color is quickly restored to be colorless and transparent when the sunlight is removed.

The composition of the photochromic soft contact lens of the present invention may be prepared by a method including the steps: (S1) synthesizing a copolymer of a fluoroester compound and 2-hydroxyethyl methacrylate; (S2) mixing a contact lens composition including a polyethylene(propylene)oxide-containing (meth)acrylate compound, a hydrophilic acrylate monomer, a crosslinking agent, and an initiator with the copolymer prepared in step (S1); (S3) dissolving a photochromic dye mixed in step (S2); (S4) injecting the composition dissolved in step (S3) to a mold for forming the contact lens; (S5) heat-treating the mold for forming the contact lens to which the composition in step (S4) is injected; (S6) separating the formed contact lens from the mold; (S7) wetting and disinfecting the contact lens; and (S8) packaging and sterilizing the contact lens.

The fluoroester compound is represented by Chemical Formula 1 and the polyethylene(propylene)oxide-containing (meth)acrylate compound is represented by Chemical Formula 2.

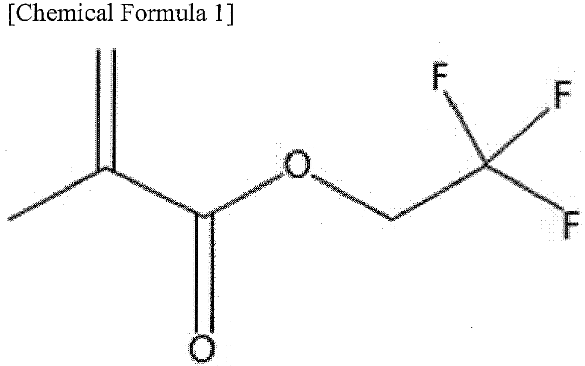

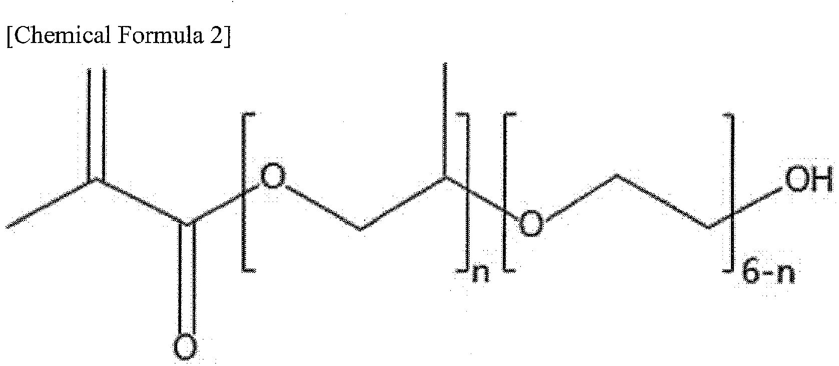

In preferred embodiment, n can be 0, 3, 6.

The fluoroester compound may include 2,2,2-trifluoroethyl methacrylate as an example. The reason why the copolymer is synthesized in advance and used with 2-hydroxyethyl methacrylate is that the fluoroester compound has strong hydrophobicity and the 2-hydroxyethyl methacrylate has strong hydrophilicity. In the case of simple mixing use, agglomerates are formed between hydrophilic materials and hydrophobic materials, respectively, and thus there may be a problem in that a contact lens is not uniformly formed. Therefore, the copolymer is synthesized in advance of the mixing of the composition for a contact lens. The copolymer is synthesized by mixing the fluoroester compound represented by Chemical Formula 1 and the 2-hydroxyethyl methacrylate represented by the following Chemical Formula 3 at a predetermined mixing ratio, adding an acrylate thermal polymerization initiator and heat-polymerizing by a heat-treating method to synthesize a copolymer represented by Chemical Formula 4.

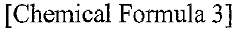

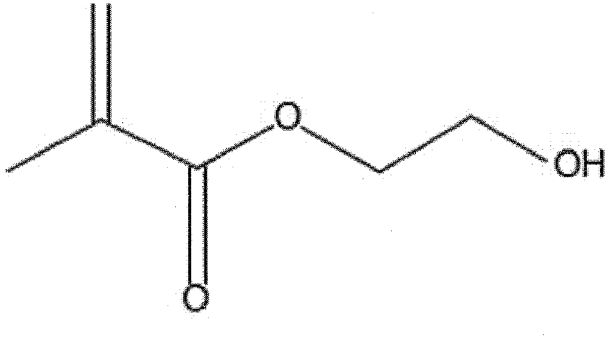

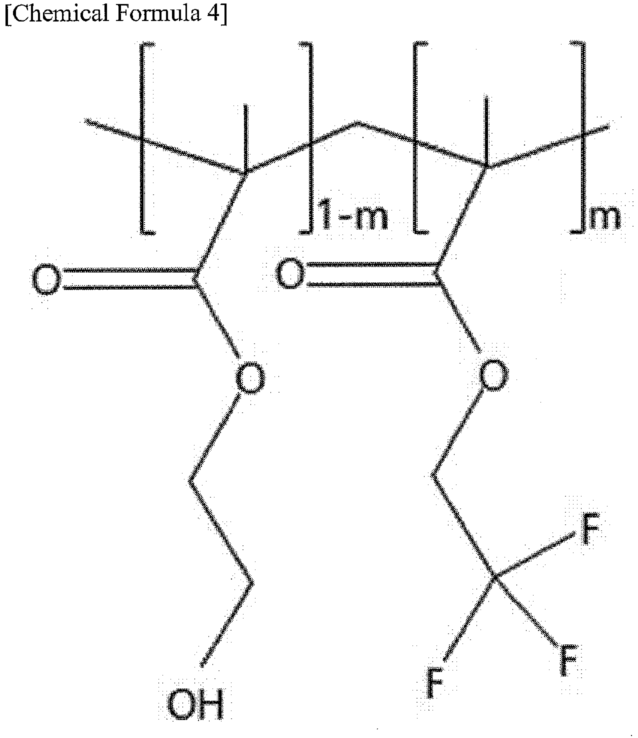

In one embodiment, m can be any value including and bewteen 0.1 to 0.3.

In this case, the mixing ratio of the fluoroester compound is preferably 10 to 30 mol%. When the content is less than 10 mol%, there is no effect of the fluoroester compound and when the content is more than 30 mol%, hydrophobicity of the copolymer is too strong.

Further, the content of the copolymer is preferably 20 to 50 wt% with respect to the entire composition. When the content is less than 20 wt%, the whitening problem may not be prevented when the contact lens is wetted and when the content is more than 50 wt%, hydrophobicity becomes too strong and thus, even after the contact lens is wetted, the lens is hardened and causes discomfort when worn on the eye.

The thermal polymerization initiator used when synthesizing the copolymer is selected and used from peroxides such as benzoyl peroxide, cumyl peroxide, butyl peroxide, butyl peroxybenzoate and the like or nitrile compounds such as 2,2'-azobis(2,4-dimethylpentanenitrile), 2,2'-azobis(2-methylpropanenitrile), 2,2'-azobisisobutyronitrile, 2,2'-azobisvaleronitrile and the like, and the content thereof is preferably 0.1 to 2 wt% with respect to the entire weight of the acrylate composition. When the content is less than 0.1 wt%, the copolymer is not easily synthesized, and when the content is more than 2 wt%, there may be a problem in that solidification may occur during the thermal polymerization. A heating temperature when the copolymer is synthesized is preferably 90 to 120°C and an organic solvent may be contained in order to prevent the solidification during the thermal polymerization. As the organic solvent, an aromatic solvent such as benzene, toluene and xylene or a ketone solvent such as cyclohexanone and methylisobutylketone may be used. However, the organic solvent may have problems such as non-polymerization and human hazard when the contact lens is formed, and thus, it is preferred to remove the composition for forming the contact lens by a separate process during mixing.

The polyethylene(propylene)oxide-containing (meth)acrylate compound of Chemical Formula 2 may include, for example, polyethylene glycol monomethacrylate, polypropylene glycol monomethacrylate, polyethylene glycol monoacrylate, polypropylene glycol monoacrylate, and the like and the compounds may be used alone or in combination of two or more. The content of the polyethylene(propylene)oxide-containing (meth)acrylate compound is preferably 5 to 20 wt% with respect to the entire composition. When the content is less than 5 wt%, the discoloration speed at which the color is darkly discolored and the speed at which the discolored color disappears are not fast, and when the content is more than 20 wt%, the crosslinking density at the time of forming the contact lens is lowered, physical stiffness is lowered, and it is difficult to separate the contact lens from the mold.

The hydrophilic acrylate monomer may be used by mixing one or more of hydrophilic monomers such as 2-hydroxyethyl methacrylate, N-vinyl pyrrolidone, N,N-dimethyl acrylamide, methacrylic acid, and the like. The crosslinking agent may be used by mixing one or more of monomers having two or more functional carbon double bonds, such as ethylene glycol dimethacrylate, tetraethylene glycol dimethacrylate, trimethylolpropane trimethacrylate, divinylbenzene, and the like, and the content thereof is preferably 0.5 to 2 wt% with respect to the entire composition. When the content is less than 0.5 wt%, crosslinking is insufficient and the physical stiffness and elasticity of the contact lens deteriorate, and when the content is more than 2 wt%, there may be a problem in that the water content of the contact lens may decrease during wetting. The initiator may be selected and used from peroxides such as benzoyl peroxide, cumyl peroxide, butyl peroxide and butyl peroxybenzoate or nitrile compounds such as 2,2'-azobis(2,4-dimethylpentanenitrile), 2,2'-azobis(2-methylpropanenitrile), 2,2'-azobisisobutyronitrile and 2,2'-azobisvaleronitrile .The content thereof is preferably 0.05 to 0.3 wt% with respect to the entire composition. When the content is less than 0.05 wt%, there may be a problem in that the contact lens is not polymerized and when the content is more than 0.3 wt%, the elasticity of the contact lens is lowered, and cracks are likely to occur when the contact lens is separated from the mold.

The photochromic dye is a naphthopyran compound, a spiropyran compound, a spirooxazine compound, a thioindigo compound or a triarylmethane compound and may particularly include, for example, 1,3-dihydro-1,3,3-trimethylspiro[2H-indole-2,3'-[3H]naphtho[2,1-b][1,4]oxazine], 1,3-dihydro-1,3,3-trimethylspiro[2H-indole-2,3'-[3H]phenantho[9,10-b][1,4]oxazine], 1',3'-dihydro-1',3',3'-trimethyl-6-nitrospiro[2H-1-benzopyran-2,2'-(2H)-indole], 1,3,3,5-tetramethylspiro[indolino-2,3'-naphtho[2,1-b][1,4]oxazine], 5-methoxy-1,3,3-trimethylspiro [indolino-2,3'-naphtho[2,1-b][1,4]oxazine], and 5-chloro-1,3,3-trimethylspiro[indolino-2,3'-naphtho[2,1-b][1,4]oxazine]. The content of the photochromic dye is preferably 0.5 to 2 wt% with respect to the entire composition. When the content is less than 0.5 wt%, the color concentration is not implemented to be effective, and when the content is more than 2 wt%, the color concentration is saturated and the photochromic dye is very expensive, and thus the photochromic dye is not economical. The photochromic dye may be added to the acrylate composition and then dissolved at room temperature to 40°C, and at a temperature of 40°C or more, it is not preferred that an initiation reaction of acrylate may be caused.

The acrylate composition for forming the photochromic soft contact lens mixed through the steps is injected to the mold prepared separately. A material of the mold is not particularly limited, but in terms of ease of separation of the formed contact lens, the mold made of polypropylene is preferable. The mold injected with the composition is heated at a temperature of 60 to 120°C for 4 to 12 hours and the composition in the mold is crosslinked to form the contact lens. Thereafter, the contact lens formed by the process is separated from the mold and immersed in a separate wetting solution to perform swelling and hydration. The wetting solution may use a physiological saline of sodium chloride 0.9 wt% or be separately prepared. The wetting treatment is performed by immersing at room temperature for 1 to 2 hours, and thereafter, a heat treatment is performed at a temperature of 60 to 80°C for 2 to 4 hours, and the unreacted monomers remaining on the contact lens during the heat treatment are discharged to the wetting solution from the contact lens, and it is generally referred to as a disinfection process. Thereafter, the lens treated by the process is packaged in a plastic or glass container filled with a physiological saline of sodium chloride 0.9 wt% and then subjected to a high pressure steam sterilization process in which all microorganisms are removed by saturated steam having a pressure of 1 atm or higher to complete the preparation of the contact lens.

According to the present invention, it is possible to prepare a photochromic soft contact lens, which is optically transparent and has no whitening, rapidly discolored to have a color by the sunlight, and quickly restored to be colorless and transparent when the sunlight is removed.

Hereinafter, Examples of the present invention will be described in detail to help in understanding of the present invention. However, Examples according to the present invention may be modified in various different forms and it should not to be interpreted that the scope of the present invention is limited to the following Examples. Examples of the present invention will be provided for more completely describing the present invention to those skilled in the art.

### <Preparation Example 1> Synthesis of copolymer

137.73g of toluene is added in a reactor capable of stirring and heating and then heated up to 120°C, and continuously stirred. Separately, a mixture is prepared to uniformly mix 104.11g (0.8mol) of 2-hydroxyethyl methacrylate, 33.62 g (0.2 mol) of 2,2,2-trifluoroethyl methacrylate, and 0.69 g (0.5 wt%) of benzoyl peroxide as a thermal polymerization initiator, and thereafter, the mixture is dropped in the reactor in which the toluene is heated at 120°C for 2 hours and then additionally maintained at 120°C for 2 hours to synthesize the copolymer.

### <Example 1>

60 g of the copolymer synthesized in Preparation Example 1 and 57.85 g of 2-hydroxyethyl methacrylate were uniformly mixed and then subjected to vacuum distillation under a condition of a temperature of 60°C and pressure of 150 torr by using a vacuum distillation apparatus to completely remove toluene contained in the copolymer. Thereafter, 10 g of polyethylene glycol monomethacrylate with n = 0 in Chemical Formula 2, 1 g of ethylene glycol dimethacrylate, 0.15 g of 2,2'-azobisisobutyronitrile, and 1 g of a photochromic dye were mixed and then stirred at room temperature for 30 minutes to uniformly mix the composition and completely dissolve the photochromic dye. The photochromic dye used at this time was a material of which the color was changed to a black color when ultraviolet rays of the sunlight was exposed and used a raw material which was commercially available as the trade name of volcanic gray.

The composition prepared above was injected into a mold made of polypropylene formed from our company and then subjected to heat treatment at 60°C for 8 hours and at 120°C for 4 hours to complete crosslinking of the composition. After being separated from the mold, the contact lens was immersed an d swollen in a physiological saline of sodium chloride 0.9 wt% for 1 hour and heated at a temperature of 80°C for 4 hours to complete the disinfection process. Thereafter, the contact lens was packaged in a glass container filled with the physiological saline of sodium chloride 0.9 wt% and then sterilized for 20 minutes at a temperature of 120°C and a pressure of 200 kPa.

### <Example 2>

Except for using polypropylene glycol monoacrylate with n = 6 instead of polyethylene glycol monomethacrylate with n = 0 as the polyethylene(propylene)oxide-containing (meth)acrylate compound in the Example 1, a contact lens was prepared in the same manner as the Example 1.

### <Comparative Example 1>

When preparing the composition for the contact lens in the Example 1, except for using the same amount of 2-hydroxyethyl methacrylate without using polyethylene glycol monomethacrylate, a contact lens was prepared in the same manner as the Example 1.

### <Comparative Example 2>

80.53 g of 2-hydroxyethyl methacrylate, 7.32 g of 2,2,2-trifluoroethyl methacrylate, 10 g of polyethylene glycol monomethacrylate with n = 0 in Chemical Formula 2, 1 g of ethylene glycol dimethacrylate, 0.15 g of 2,2'-azobisisobutyronitrile, and 1 g of a photochromic dye were mixed and stirred at room temperature for 30 minutes in a container capable of stirring to uniformly mix a composition and completely dissolve a photochromic dye. The photochromic dye used at this time was the same as the Example 1. The composition prepared above was processed in the same manner as the Example 1 to prepare a contact lens.

### <Comparative Example 3>

97.85g of 2-hydroxyethyl methacrylate, 1 g of ethylene glycol dimethacrylate, 0.15 g of 2,2'-azobisisobutyronitrile, and 1 g of a photochromic dye were mixed and stirred at room temperature for 30 minutes in a container capable of stirring to uniformly mix the composition and completely dissolve a photochromic dye. The photochromic dye used at this time was the same as Example 1. The composition prepared above was processed in the same manner as the Example 1 to prepare a contact lens.

The contact lenses prepared by the Examples and the Comparative Examples were evaluated by the following Experimental Examples and then the results were summarized in Table 1.

### Experimental Example 1> Observation of Appearance

With respect to the contact lenses prepared through the Examples 1 and 2 and the Comparative Examples 1, 2, and 3, occurrence of strains or whitening was observed with the naked eye.

### <Experimental Example 2> Measurement of Discoloration speed

With respect to the contact lenses prepared through the Examples 1 and 2 and the Comparative Examples 1, 2, and 3, the speed at which the color was darkly discolored when the sunlight was exposed was observed over time and evaluated.
Fast: Darkly discolored within 10 seconds after exposure of sunlight
Normal: Darkly discolored for 10 to 20 seconds after exposure of sunlight
Slow: Darkly discolored after 20 seconds after exposure of sunlight

### Experimental Example 2> Measurement of Disappearing speed

With respect to the contact lenses prepared through the Examples 1 and 2 and the Comparative Examples 1, 2, and 3, the time from exposure to sunlight to be in a darkly discolored state to the restoration to an original colorless and transparent state after blocking the exposure of the sunlight was observed and evaluated.
Fast: Restored colorless and transparently within 30 seconds after blocking sunlight
Normal: Restored colorless and transparently for 30 seconds to 1 minute after blocking sunlight
Slow: Restored colorless and transparently after 1 minute after blocking sunlight

**[Table 1]**

| Classification | Example 1 | Example 2 | Comparative Example 1 | Comparative Example 2 | Comparative Example 3 |
|---|---|---|---|---|---|
| Appearance | Good | Good | Good | strain | Whitening |
| Discoloration speed | Fast | Fast | Normal | Fast | Slow |
| Disappearing speed | Fast | Fast | Slow | Fast | Slow |

As illustrated in Table 1 above, it can be seen that the contact lenses in the Examples 1 and 2 according to the present invention have a good appearance and have high discoloration speed and disappearing speed to be commercially used. It can be seen that in the contact lens prepared by the method of Comparative Example 1, that is, the contact lens without using the polyethylene(propylene)oxide-containing (meth)acrylate compound, the discoloration speed is slow and the speed at which the color is restored to be colorless and transparent is slow. It can be seen that in the case of using the contact lens prepared by the method of Comparative Example 2, that is, the contact lens simply mixing 2-hydroxyethyl methacrylate and a fluoroester compound without copolymerization, there is a problem in that the lens is not uniform and the strains occur. It can be seen that in the contact lens prepared by the method of Comparative Example 3, that is, the contact lens without using the copolymer of 2-hydroxyethyl methacrylate and a fluoroester compound and a polyethylene(propylene)oxide-containing (meth)acrylate compound, whitening occurs in the contact lens and the discoloration speed and the disappearing speed are slow.

### [Industrial Applicability]

According to the present invention, it is possible to prepare a photochromic soft contact lens, which is optically transparent and has no whitening, rapidly discolored to have a color by the sunlight, and quickly restored to be colorless and transparent when the sunlight is removed.

## Claims

1. A composition for a photochromic soft contact lens comprising: a copolymer synthesized of a fluoroester compound represented by the following Chemical Formula 1 and 2-hydroxyethyl methacrylate, a polyethylene(propylene)oxide-containing (meth)acrylate compound represented by the following Chemical Formula 2, 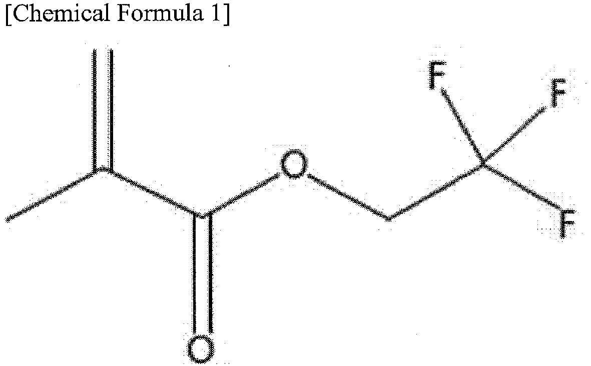 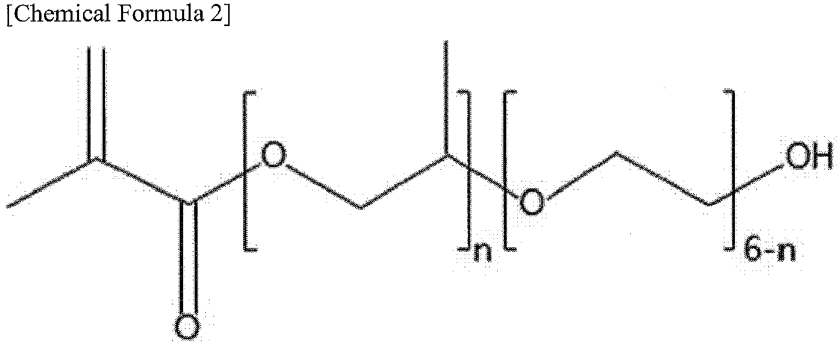 wherein n is 0, 3 or 6,
a photochromic dye, a crosslinking agent, a hydrophilic acrylate monomer and an initiator.

2. A method for preparing a photochromic soft contact lens, the method comprising the following steps:
(S1) synthesizing a copolymer of a fluoroester compound and 2-hydroxyethyl methacrylate;
(S2) mixing a contact lens composition including a polyethylene(propylene)oxide-containing (meth)acrylate compound, a hydrophilic acrylate monomer, a crosslinking agent, and an initiator with the copolymer prepared in step (S1);
(S3) dissolving a photochromic dye mixed in step (S2);
(S4) injecting the composition dissolved in step (S3) to a mold for forming the contact lens;
(S5) heat-treating the mold for forming the contact lens to which the composition in step (S4) is injected;
(S6) separating the formed contact lens from the mold;
(S7) wetting and disinfecting the contact lens; and
(S8) packaging and sterilizing the contact lens.

3. The method of claim 2, wherein the fluoroester compound is 2,2,2-trifluoroethyl methacrylate, the content thereof is 10 to 30 mol% in the copolymer, and the content of the copolymer is 20 to 50 wt% with respect to the entire composition.

4. The method of claim 2, wherein the polyethylene(propylene)oxide-containing (meth)acrylate is at least one selected from the group consisting of polyethylene glycol monomethacrylate, polypropylene glycol monomethacrylate, polyethylene glycol monoacrylate, and polypropylene glycol monoacrylate, and the content thereof is 5 to 20 wt% with respect to the entire composition.

5. The method of claim 2, wherein the hydrophilic acrylate monomer is at least one selected from the group consisting of 2-hydroxyethyl methacrylate, N-vinylpyrrolidone, N,N-dimethyl acrylamide and methacrylic acid.

6. The method of claim 2, wherein the crosslinking agent is used by mixing one or more kinds of monomers having two or more functional carbon double bonds consisting of ethylene glycol dimethacrylate, tetraethylene glycol dimethacrylate, trimethylolpropane trimethacrylate, and divinylbenzene, and used with an amount of 0.5 to 2 wt% with respect to the entire composition.

7. The method of claim 2, wherein the initiator is selected and used from peroxides such as benzoyl peroxide, cumyl peroxide, butyl peroxide and butyl peroxybenzoate or nitrile compounds such as 2,2'-azobis(2,4-dimethylpentanenitrile), 2,2'-azobis(2-methylpropanenitrile), 2,2'-azobisisobutyronitrile and 2,2'-azobisvaleronitrile, and used with an amount of 0.05 to 0.3 wt% with respect to the entire composition.

8. The method of claim 2, wherein the photochromic dye includes a naphthopyran compound, a spiropyran compound, a spirooxazine compound, a thioindigo compound or a triarylmethane compound, and particularly, is selected from the group consisting of 1,3-dihydro-1,3,3-trimethylspiro[2H-indole-2,3'-[3H]naphtho[2,1-b][1,4]oxazine], 1,3-dihydro-1,3,3-tiimethylspiro[2H-indole-2,3'-[3H]phenantho [9,10-b][1,4]oxazine], 1',3'-dihydro -1',3',3'-trimethyl-6-nitrospiro[2H-1-benzopyran-2,2'-(2H)-indole], 1,3,3,5-tetramethylspiro[indolino-2,3'-naphtho[2,1-b][1,4]oxazine], 5-methoxy-1,3,3-trimethylspiro[indolino-2,3'-naphtho[2,1-b][1,4]oxazine], and 5-chloro-1,3,3-trimethylspiro[indolino-2,3'-naphtho[2,1-b][1,4]oxazine], and used with an amount of 0.5 to 2 wt% with respect to the entire composition.

## Patentansprüche

1. Zusammensetzung für eine photochrome weiche Kontaktlinse, umfassend:
ein Copolymer, das aus einer Fluoresterverbindung, dargestellt durch die folgende Chemische Formel 1, und 2-Hydroxyethylmethacrylat synthetisiert wird,, eine Polyethylen(propylen)oxid enthaltende (Meth)acrylatverbindung, dargestellt durch die folgende Chemische Formel 2, 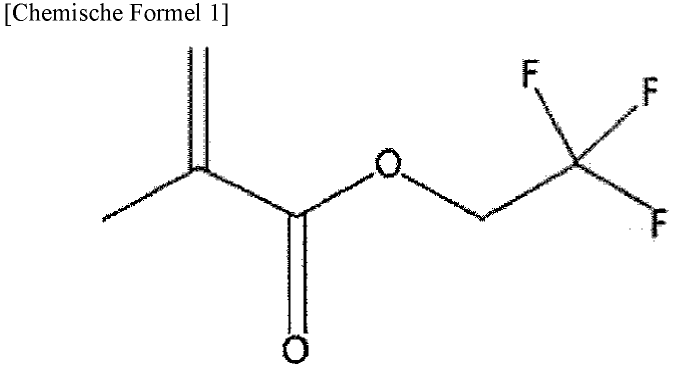 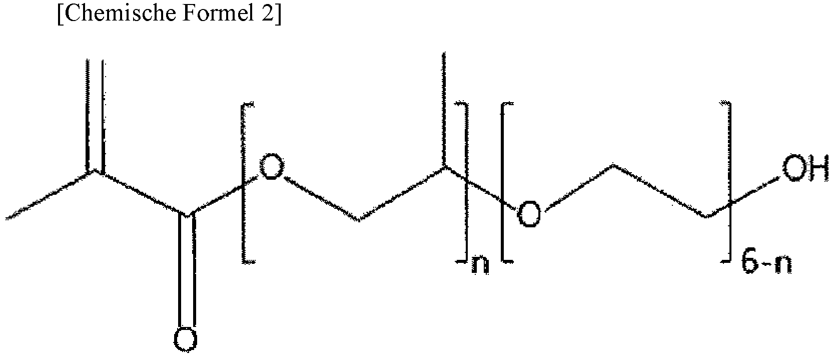 wobei n 0, 3 oder 6 ist, einen photochromen Farbstoff, ein Vernetzungsmittel, ein hydrophiles Acrylatmonomer und einen Initiator.

2. Verfahren zum Herstellen einer photochromen weichen Kontaktlinse, wobei das Verfahren die folgenden Schritte umfasst:
(S1) Synthetisieren eines Copolymers aus einer Fluoresterverbindung und 2-Hydroxyethylmethacrylat;
(S2) Mischen einer Kontaktlinsenzusammensetzung, die eine polyethylen(propylen)oxidhaltige (Meth)acrylatverbindung, ein hydrophiles Acrylatmonomer, ein Vernetzungsmittel und einen Initiator beinhaltet, mit dem in Schritt (S1) hergestellten Copolymer;
(S3) Auflösen eines in Schritt (S2) gemischten photochromen Farbstoffs;
(S4) Einspritzen der in Schritt (S3) aufgelösten Zusammensetzung in eine Form zum Ausbilden der Kontaktlinse;
(S5) Wärmebehandeln der Form zum Ausbilden der Kontaktlinse, in die die Zusammensetzung in Schritt (S4) eingespritzt wird;
(S6) Trennen der ausgebildeten Kontaktlinse von der Form;
(S7) Benetzen und Desinfizieren der Kontaktlinse; und
(S8) Verpacken und Sterilisieren der Kontaktlinse.

3. Verfahren nach Anspruch 2, wobei die Fluoresterverbindung 2,2,2-Trifluorethylmethacrylat ist, der Gehalt davon 10 bis 30 Mol-% in dem Copolymer beträgt und der Gehalt des Copolymers 20 bis 50 Gew.-%, in Bezug auf die gesamte Zusammensetzung, beträgt.

4. Verfahren nach Anspruch 2, wobei das polyethylen(propylen)oxidhaltige (Meth)acrylat aus der Gruppe ausgewählt ist, die aus Polyethylenglykolmonomethacrylat, Polypropylenglykolmonomethacrylat, Polyethylenglykolmonoacrylat und/oder Polypropylenglykolmonoacrylat besteht, und der Gehalt davon 5 bis 20 Gew.-%, in Bezug auf die gesamte Zusammensetzung, beträgt.

5. Verfahren nach Anspruch 2, wobei das hydrophile Acrylatmonomer aus der Gruppe ausgewählt ist, die aus 2-Hydroxyethylmethacrylat, N-Vinylpyrrolidon, N,N-Dimethylacrylamid und/oder Methacrylsäure besteht.

6. Verfahren nach Anspruch 2, wobei das Vernetzungsmittel durch Mischen einer oder mehrerer Arten von Monomeren, die zwei oder mehr funktionelle Kohlenstoffdoppelbindungen, die aus Ethylenglykoldimethacrylat, Tetraethylenglykoldimethacrylat, Trimethylolpropantrimethacrylat und Divinylbenzol bestehen, aufweisen, verwendet wird und mit einer Menge von 0,5 bis 2 Gew.-%, in Bezug auf die gesamte Zusammensetzung, verwendet wird.

7. Verfahren nach Anspruch 2, wobei der Initiator aus Peroxiden wie Benzoylperoxid, Cumylperoxid, Butylperoxid und Butylperoxybenzoat oder Nitrilverbindungen wie etwa 2,2'-Azobis(2,4-dimethylpentannitril), 2,2'-Azobis(2-methylpropannitril), 2,2'-Azobisisobutyronitril und 2,2'-Azobisvaleronitril ausgewählt und verwendet wird, und mit einer Menge von 0,05 bis 0,3 Gew.-%, in Bezug auf die gesamte Zusammensetzung, verwendet wird.

8. Verfahren nach Anspruch 2, wobei der photochrome Farbstoff eine Naphthopyranverbindung, eine Spiropyranverbindung, eine Spirooxazinverbindung, eine Thioindigoverbindung oder eine Triarylmethanverbindung beinhaltet, und insbesondere aus der Gruppe ausgewählt ist, die aus 1,3-Dihydro-1,3,3-trimethylspiro[2H-indol-2,3'-[3H]naphtho[2,1-b][1,4]oxazin], 1,3-Dihydro-1,3,3-trimethylspiro[2H-indol-2, 3'-[3H]phenantho [9,10-b][1,4]oxazin], 1',3'-Dihydro-1,3',3'-trimethyl-6-nitrospiro[2H-1-benzopyran-2,2'-(2H)-indol], 1,3,3,5-tetramethylspiro[indolino-2,3'-naphtho[2,1-b][1, 4]Oxazin], 5-Methoxy-1,3,3-trimethylspiro[indolino-2,3'-naphtho[2,1-b][1,4]oxazin] und 5-Chlor-1,3,3-trimethylspiro[indolino-2,3'-naphtho[2,1-b][1,4]oxazin] besteht, und mit einer Menge von 0,5 bis 2 Gew.-%, in Bezug auf die gesamte Zusammensetzung, verwendet wird.

## Revendications

1. Composition pour une lentille de contact souple photochromique comprenant :
un copolymère synthétisé d'un composé fluoroester représenté par la formule chimique 1 suivante et du méthacrylate de 2-hydroxyéthyl, un composé (méth)acrylate contenant du polyéthylène(propylène)oxyde représenté par la formule chimique 2 suivante, 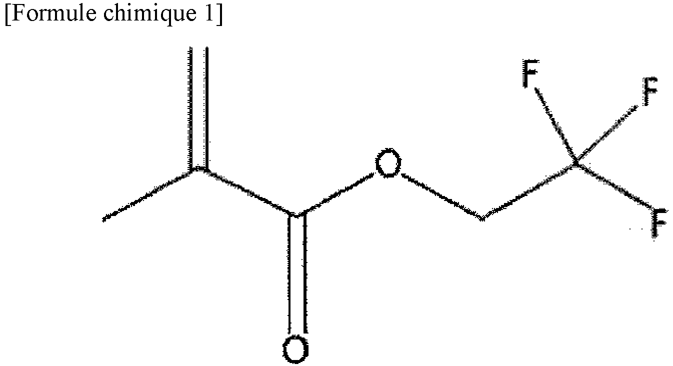 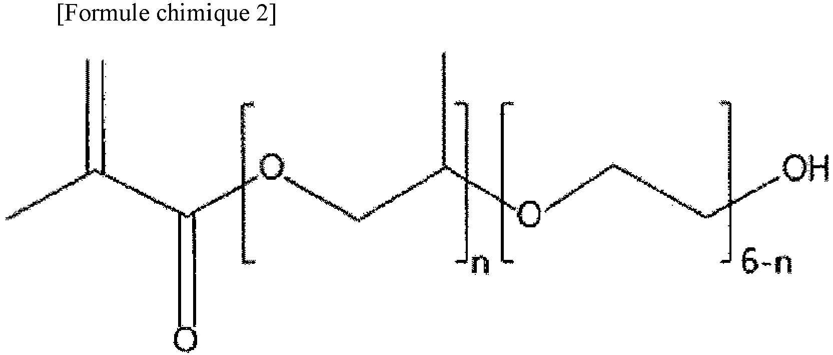 dans lequel n est 0, 3 ou 6, un colorant photochromique, un agent de réticulation, un monomère acrylate hydrophile et un initiateur.

2. Procédé de préparation d'une lentille de contact souple photochromique, le procédé comprenant les étapes suivantes :
(S1) la synthèse d'un copolymère d'un composé fluoroester et du méthacrylate de 2-hydroxyéthyl ;
(S2) le mélange d'une composition de lentille de contact comportant un composé (méth)acrylate contenant du polyéthylène(propylène)oxyde, un monomère d'acrylate hydrophile, un agent de réticulation et un initiateur avec le copolymère préparé à l'étape (S1) ;
(S3) la dissolution d'un colorant photochromique mélangé à l'étape (S2) ;
(S4) l'injection de la composition dissoute à l'étape (S3) dans un moule pour former la lentille de contact ;
(S5) le traitement thermique du moule pour former la lentille de contact à laquelle la composition à l'étape (S4) est injectée ;
(S6) la séparation de la lentille de contact formée du moule ;
(S7) le mouillage et la désinfection de la lentille de contact ; et
(S8) l'emballage et la stérilisation de la lentille de contact.

3. Procédé selon la revendication 2, dans lequel le composé fluoroester est le méthacrylate 2,2,2-trifluoroéthyl, sa teneur est de 10 à 30 % en moles dans le copolymère, et la teneur du copolymère est de 20 à 50 % en poids par rapport à la composition entière.

4. Procédé selon la revendication 2, dans lequel le (méth)acrylate contenant un polyéthylène(propylène)oxyde est choisi dans le groupe constitué par le monométhacrylate de polyéthylène glycol et/ou le monométhacrylate de polypropylène glycol et/ou le monoacrylate de polyéthylène glycol et/ou le monoacrylate de polypropylène glycol, et leur teneur est de 5 à 20 % en poids par rapport à la composition entière.

5. Procédé selon la revendication 2, dans lequel le monomère acrylate hydrophile est un monomère choisi dans le groupe constitué par le méthacrylate 2-hydroxyéthyl et/ou la N-vinylpyrrolidone et/ou l'acrylamide N,N-diméthyl et l'acide méthacrylique.

6. Procédé selon la revendication 2, dans lequel l'agent de réticulation est utilisé en mélangeant un ou plusieurs types de monomères ayant au moins deux doubles liaisons carbone fonctionnelles, comprenant du diméthacrylate d'éthylène glycol, du diméthacrylate de tétraéthylène glycol, du triméthacrylate de triméthylolpropane et du divinylbenzène, et utilisé avec une quantité de 0,5 à 2 % en poids par rapport à la composition entière.

7. Procédé selon la revendication 2, dans lequel l'initiateur est choisi et utilisé parmi les peroxydes tels que le peroxyde de benzoyle, le peroxyde de cumyle, le peroxyde de butyle et le peroxybenzoate de butyle ou les composés nitriles tels que 2,2'-azobis(2,4-diméthylpentanenitril), 2,2'-azobis(2-méthylpropanénitril), 2,2'-azobisisobutyronitril et 2,2'-azobisvaléronitril, et utilisé avec une quantité de 0,05 à 0,3 % en poids par rapport à la composition entière.

8. Procédé selon la revendication 2, dans lequel le colorant photochromique comporte un composé napthopyrane, un composé spiropyrane, un composé spirooxazine, un composé thioindigo ou un composé triarylméthane, est notamment choisi dans le groupe constitué par 1,3-dihydro-1,3,3-triméthylspiro[2H-indole-2,3'-[3H]naptho[2,1-b] [1,4]oxazine], 1,3-dihydro-1,3,3-triméthylspiro[2H-indole-2,3'-[3H]phénantho [9,10-b] [1,4]oxazine], 1',3' -dihydro -1,3',3'-triméthyl-6-nitrospiro[2H-1-benzopyran-2,2'-(2H)-indole], 1,3,3,5-tetraméthylspiro[indolino-2,3'-naptho[2,1-b][1,4]oxazine], 5-méthoxy-1,3,3-triméthylspiro[indolino-2,3'-naptho[2,1-b][1,4]oxazine] et 5-chloro-1,3,3-triméthylspiro [indolino-2,3'-naptho[2,1-b][1,4]oxazine], et utilisé avec une quantité de 0,5 à 2 % en poids par rapport à la composition entière.
